# FASCICULE DE BREVET EUROPEEN

(11) **EP 1 700 045 B1**
(45) Date de publication et mention de la délivrance du brevet: **26.03.2008**
(21) Numéro de dépôt: 04816550.0
(22) Date de dépôt: 15.12.2004
(51) Int. Cl.: F16B 23/00

(54) **VIS COMPRENANT UNE EMPREINTE ADAPTEE A LA FORME DE L'EXTREMITE D'UN FORET**
SCHRAUBE MIT EINEM SCHRAUBENKOPF MIT INNENSECHSKANT, DER AN EINE BOHRERENDFORM ANGEPASST IST
SCREW PROVIDED WITH A SOCKET HEAD ADAPTED TO A DRILL END SHAPE

(30) Priorité: 30.12.2003 FR 0315638; 28.01.2004 FR 0450154
(43) Date de publication de la demande: 13.09.2006
(73) Titulaire: Leger, Serge, 87300 Breuilaufa (FR)
(72) Inventeur: Leger, Serge, 87300 Breuilaufa (FR)
(74) Mandataire: Fantin, Laurent
(86) Numéro de dépôt international: PCT/FR2004/050696
(87) Numéro de publication internationale: WO 2005/073569

(56) Documents cités:
- DE-A- 10 152 295
- FR-A- 2 216 474
- GB-A- 2 318 534

## Description

La présente invention se rapporte à une vis avec une empreinte adaptée à la forme de l'extrémité d'un foret à béton.

Pour la fixation d'une vis dans un objet, on a recours à différents outils, notamment une perceuse ou un perforateur pour réaliser un trou, un marteau pour enfoncer une cheville dans le trou ainsi qu'un tournevis pour visser une vis dans la cheville.

De manière connue, une vis comprend un corps avec une portion filetée et une tête de formes variées comportant une empreinte pour autoriser le vissage et/ou le dévissage.

Sur les modèles déjà existants, les empreintes sont de différentes formes et de différentes dimensions, les plus courantes étant, une fente qui traverse toute la tête de vis, une croix dite cruciforme, un papillon, une étoile, un carré, un multidents, une étoile alésée, etc.

L'inconvénient de toutes ces formes d'empreinte est de nécessiter pour le vissage ou le dévissage un outil spécifique, adapté à la forme de l'empreinte. Ainsi, lorsque l'utilisateur décide de fixer une vis dans un objet, il doit au préalable se munir d'une kyrielle d'outils, notamment du tournevis adapté à la forme de l'empreinte de la vis.

Le document 68-2.318.534 décrit un foret compatible avec une tête de vis. A cet effet, la pastille disposée à l'extrémité du foret est allongée afin de pouvoir être utilisée à la manière d'un tournevis à embout plat. En complément, la tête de la vis comprend une fente susceptible de recevoir l'embout du foret.

Cette solution a les inconvénients suivants :

Elle nécessite de modifier la tête de la vis et le foret. La modification du foret, à savoir l'allongement de la pastille conduit à réduire l'efficacité du foret et à fragiliser la pastille qui n'est plus protégée par le corps du foret. Cette solution ne permet pas d'utiliser un outil existant à savoir un foret à béton actuellement commercialisé mais nécessite d'acheter un outil spécifique à savoir un foret avec une pastille allongée que les professionnels ou les particuliers rechigneront à acheter compte tenu des défauts mentionnés ci-dessus.

Selon un autre inconvénient, elle ne permet pas d'obtenir un couple de serrage important. En effet, les vis ayant une empreinte à fente ne permettent pas d'exercer un effort de serrage important. Les parois de la fente contre lesquelles prend appui la pastille du foret ont tendance à se déformer et à ne plus retenir la pastille rendant impossible le vissage comme toute les vis à fente.

Le document FR-2.216.474 décrit une vis dont la tête comprend une empreinte adaptée à un foret à gorge hélicoïdal. Selon ce document, l'empreinte comprend deux saillies 5 opposées de dimensions telles qu'elles puissent s'engager dans les rainures d'un foret hélicoïdal.

Les inconvénients de cette solution sont les suivants :

La forme de l'empreinte ne permet pas un dévissage de la vis à l'aide du foret car selon ce document on utilise l'arête de coupe de la gorge hélicoïdale du foret comme moyen d'entrainement. En effet, dans le sens du vissage cette arête de coupe permet d'entraîner efficacement la tête alors qu'elle ne le permet pas en sens inverse.

La partie utilisée du foret, à savoir l'arête de coupe de la gorge hélicoïdale, a un profil effilé pour assurer un perçage efficace. Ce profil effilé se mate lors du vissage et se détériore ce qui réduit la durée de vie du foret. Aussi, la présente invention vise à pallier les inconvénients de l'art antérieur en proposant une nouvelle forme d'empreinte adaptable à tous les modèles de vis, non pour des raisons esthétiques, mais pour des raisons techniques et pratiques.

A cet effet, l'invention a pour objet une vis comprenant une empreinte ayant des formes adaptées à l'extrémité d'un foret à béton comprenant une pastille disposée dans un plan médian longitudinal à son extrémité et de largeur L supérieure au diamètre du corps du foret caractérisée en ce que l'empreinte comprend une partie inférieure adaptée à l'extrémité du foret et une partie supérieure ou débouchante comprenant selon un premier plan longitudinal médian une dimension légèrement supérieure à la largeur L de la pastille et selon un autre plan longitudinal médian une dimension légèrement inférieure à la largeur L de la pastille et supérieure au diamètre du corps du foret.

D'autres caractéristiques et avantages ressortiront de la description qui va suivre de l'invention, description donnée à titre d'exemple uniquement, en regard des dessins annexés sur lesquels:
- la figure 1 est une coupe de la tête d'une vis selon l'invention,
- la figure 2A est une vue de dessus de la tête d'une vis selon une première variante,
- la figure 2B est une vue de dessus de la tête d'une vis selon une autre variante,
- la figure 3A est une vue en élévation latérale de l'extrémité d'un foret ou mèche dite à béton,
- la figure 3B est une vue de dessous du foret de la figure 3A,
- la figure 4 est une vue en élévation d'un embout adapté à la forme d'empreinte de la figure 2B, et
- les figures 5A à 5D sont un synoptique illustrant la mise en place d'une vis et éventuellement son dévissage.

De manière connue, une vis 10 comprend un corps 12 dont une partie au moins est filetée et une tête 14 comportant une empreinte 16 permettant le vissage et/ou le dévissage. Par plan longitudinal médian de la vis, on entend un plan contenant l'axe de rotation 15 de la vis.

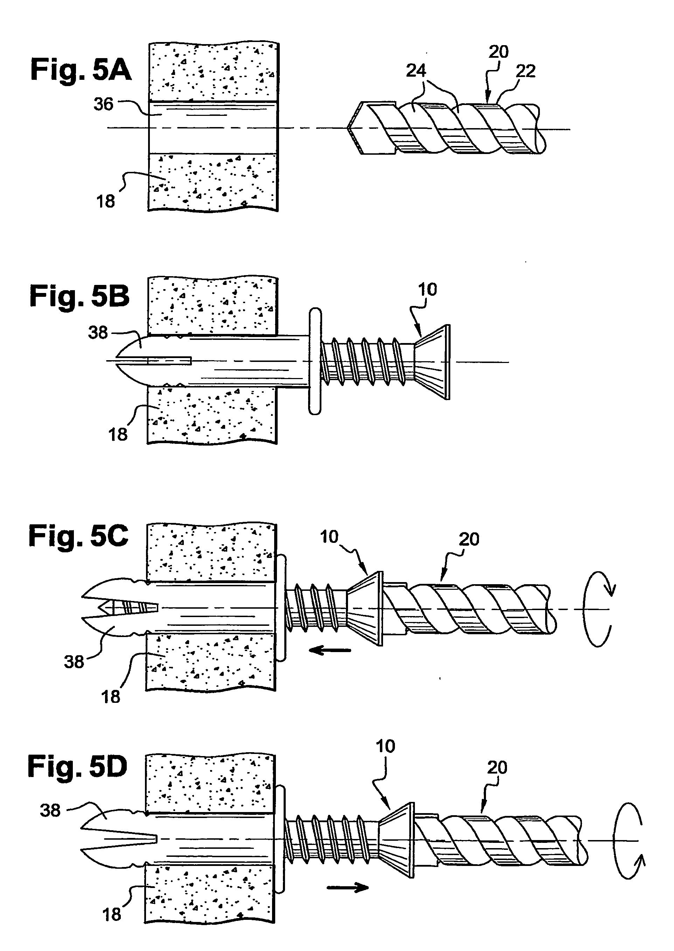

Pour réaliser un trou dans un objet, notamment dans une paroi 18 illustrée sur les figures 5A à 5D, on utilise un foret 20, une mèche ou analogue, de préférence un foret dit à béton, susceptible d'être fixé à une perceuse ou un perforateur. Pour la suite de la description, par foret on entend tout outil permettant de réaliser un trou et susceptible d'être fixé à une perceuse ou à un perforateur.

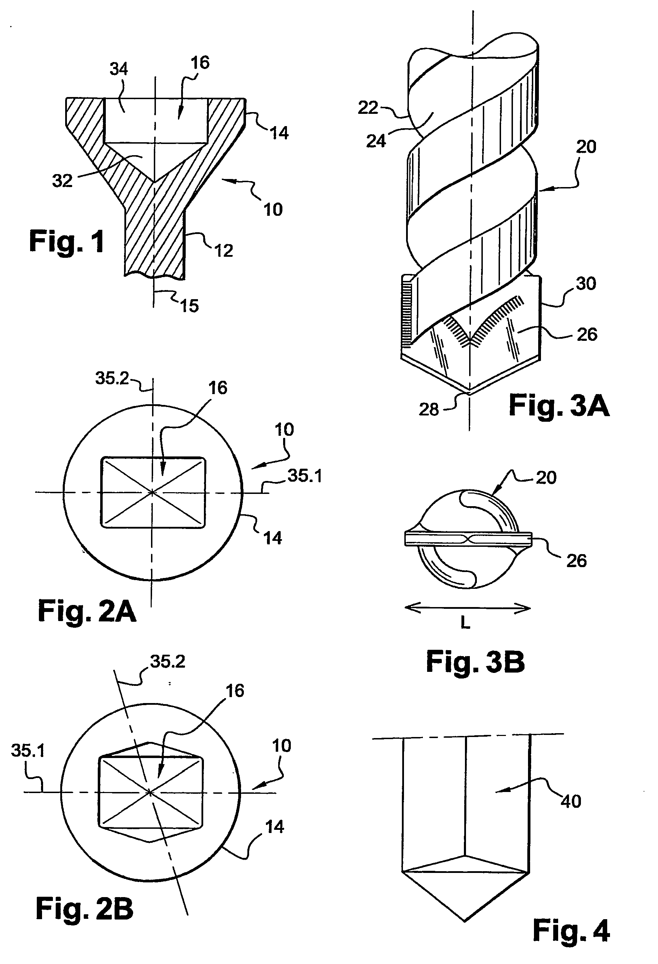

Comme illustré sur les figures 3A et 3B, un foret 20 comprend un corps 22 sensiblement cylindrique avec en périphérie une ou plusieurs gorges hélicoïdales 24 permettant l'évacuation de la matière et à une première extrémité des moyens de fixation, notamment à un mandrin. Les forets dit à béton comprennent à l'extrémité libre au moins une pastille 26 en matériau résistant, notamment en tungstène. Cette pastille 26 de forme sensiblement plate est insérée dans une fente selon un plan longitudinal médian puis soudée. Elle comprend une extrémité 28 en pointe et un corps 30 de largeur L supérieure au diamètre du corps 22 du foret.

Selon l'invention, l'empreinte 16 de la vis a des formes adaptées à l'extrémité d'un foret à béton 20 de manière à permettre le vissage de la vis à l'aide dudit foret.

Selon une caractéristique de l'invention, l'empreinte 16 comprend une partie inférieure 32 adaptée à l'extrémité du foret et une partie supérieure ou débouchante 34 comprenant selon un premier plan longitudinal médian 35.1 une dimension légèrement supérieure à la largeur L de la pastille 26 et selon un autre plan longitudinal médian 35.2, de préférence sensiblement perpendiculaire au premier plan longitudinal médian, une dimension légèrement inférieure à la largeur L de la pastille 26 et supérieure au diamètre du corps du foret.

Comme illustré sur les différentes figures, l'empreinte 16 est non débouchante sur le bord de la tête de la vis.

Cet agencement permet le vissage et le dévissage de la vis à l'aide d'un foret à béton.

Ainsi, selon l'invention, cette nouvelle empreinte de vis permet de visser et dévisser une vis en utilisant uniquement un perforateur ou une perceuse et un foret.

La première étape, illustrée par la figure 5A, consiste à réaliser un trou 36 à l'aide d'un foret 20. La deuxième étape, illustrée par la figure 5B, consiste à placer une cheville 38 avec une vis 10 dans le trou 36. Ensuite, en plaçant l'extrémité du foret 20 dans l'empreinte 16 et en commandant la rotation du foret, la cheville et/ou la vis s'enfonce grâce à l'effet de percussion du perforateur, et la vis 10 se visse dans la cheville 38, comme illustré sur la figure 5C. Avantageusement, on peut utiliser le foret pour dévisser la vis 10 en inversant le sens de rotation du foret, comme illustré par la figure 5D.

L'invention permet une utilisation plus rationnelle, compte tenu du gain de temps et de travail pour l'utilisateur et un investissement en outil bien moins élevé pour l'entreprise ou le particulier.

Cette nouvelle empreinte peut s'appliquer à différents type de vis, comme les vis à placo-plâtre, les vis à bois et tout autre vis utilisée dans le bâtiment et les travaux publics, mais également en mécanique ou tôlerie. Du fait que les parois latérales du foret ne sont pas coupantes, la vis peut être réalisée en matériau moins dur que le foret, par exemple en matière plastique.

Selon une autre caractéristique de l'invention, on peut prévoir un embout 40, comme illustré sur la figure 4, avec une extrémité de formes adaptées à celles de l'empreinte 16, susceptible de s'adapter à des tournevis ou des visseuses/dévisseuses.

Selon un mode de réalisation préféré et illustré par la figure 2A, la partie supérieure 34 a une section rectangulaire.

Selon un autre mode de réalisation illustré par la figure 2B, la partie supérieure 34 peut avoir une section hexagonale.

Dans tous les cas, la partie inférieure 32 a une forme conique, tronconique, ou pyramidale inversée tronquée ou non.

A titre d'exemple, pour un foret à béton de 6 mm, la longueur du rectangle est d'approximativement 6,2 mm et la largeur d'approximativement 4,2 mm. La partie supérieure 34 a une hauteur approximative de 2 mm et la partie inférieure 32 a une hauteur approximative de 2,5 mm.

Pour un foret de X mm de diamètre, l'empreinte aura approximativement une longueur de (X+0,2) mm et une largeur de (X-1,8) mm.

## Revendications

1. Vis comprenant une empreinte (16) ayant des formes adaptées à l'extrémité d'un foret à béton comportant une pastille (26) disposée dans un plan médian longitudinal à son extrémité et de largeur L supérieure au diamètre du corps du foret **caractérisée en ce que** l'empreinte (16) comprend une partie inférieure (32) adaptée à l'extrémité du foret et une partie supérieure ou débouchante (34) comprenant selon un premier plan longitudinal médian (35.1) une dimension légèrement supérieure à la largeur L de la pastille (26) et selon un autre plan longitudinal médian (35.2) une dimension légèrement inférieure à la largeur L de la pastille (26) et supérieure au diamètre du corps du foret.

2. Vis selon la revendication 1, **caractérisée en ce que** la partie supérieure (34) a une section rectangulaire.

3. Vis selon la revendication 2, **caractérisée en ce que** la section rectangulaire a approximativement une longueur de (X+0,2) mm et une largeur de (X-1,8) mm, X étant le diamètre du foret en mm.

4. Vis selon la revendication 1, **caractérisée en ce que** la partie supérieure (34) a une section hexagonale.

## Claims

1. A screw comprising an indentation (16) having shapes adapted to the end of a masonry drill comprising a tip (26) disposed in a longitudinal mid-plane at its end and with a width L greater than the diameter of the body of the drill, **characterised in that** the indentation (16) comprises a bottom part (36) adapted to the end of the drill and a top or emerging part (34) comprising, on a first longitudinal mid-plane (35.1), a dimension slightly greater than the width L of the tip (26) and, on another longitudinal mid-plane (35.2), a dimension slightly less than the width L of the tip (26) and greater than the diameter of the body of the drill.

2. A screw according to claim 1, **characterised in that** the top part (34) has a rectangular cross section.

3. A screw according to claim 2, **characterised in that** that the rectangular cross section has approximately a length of (X+0.2) mm and a width of (X-1.8) mm, X being the diameter of the drill in mm.

4. A screw according to claim 1, **characterised in that** the top part (34) has a hexagonal cross section.

## Patentansprüche

1. Schraube, umfassend eine Prägung (16) mit Formen, die dem Ende eines Betonbohrers angepasst sind, welcher ein Plättchen (26) aufweist, das in einer Längsmittelebene an seinem Ende angeordnet ist und dessen Breite L größer ist als der Durchmesser des Bohrerkörpers, **dadurch gekennzeichnet, dass** die Prägung (16) einen an das Ende des Bohrers angepassten unteren Teil (32) und einen oberen bzw. mündenden Teil (34) umfasst, wobei der obere Teil entlang einer ersten Längsmittelebene (35.1) eine Abmessung aufweist, die leicht größer ist als die Breite L des Plättchens (26), und entlang einer anderen Längsmittelebene (35.2) eine Abmessung aufweist, die leicht kleiner ist als die Breite L des Plättchens (26) und größer ist als der Durchmesser des Bohrerkörpers.

2. Schraube nach Anspruch 1, **dadurch gekennzeichnet, dass** der obere Teil (34) einen rechteckigen Querschnitt hat.

3. Schraube nach Anspruch 2, **dadurch gekennzeichnet, dass** der rechteckige Querschnitt eine Länge von etwa (X + 0,2) mm und eine Breite von etwa (X - 1,8) mm hat, wobei X der Durchmesser des Bohrers in mm ist.

4. Schraube nach Anspruch 1, **dadurch gekennzeichnet, dass** der obere Teil (34) einen sechseckigen Querschnitt hat.
